Europäisches Patentamt

European Patent Office

Office européen des brevets

(11) Publication number: **0 081 702**
**A1**

(12) # EUROPEAN PATENT APPLICATION

(21) Application number: **82110785.1**

(22) Date of filing: **23.11.82**

(51) Int. Cl.³: **G 01 J 3/50, G 01 N 21/55**

(30) Priority: **25.11.81 US 324829**

(43) Date of publication of application: **22.06.83**
**Bulletin 83/25**

(84) Designated Contracting States: **CH FR GB IT LI SE**

(71) Applicant: **KOLLMORGEN TECHNOLOGIES CORPORATION, Suite 300 2001 Bryan Tower, Dallas Texas 76201 (US)**

(72) Inventor: **Kishner, Stanley J., 5 Mohawk Lane, Pomona New York 10970 (US)**
Inventor: **Park, Ernest D., Americana Boulevard, Hopewell Junction New York 12533 (US)**

(74) Representative: **Königseder, Claudia, Zugspitzstrasse 65, D-8104 Grainau (DE)**

(54) **Electro-optical system for color monitoring.**

(57) A color monitoring system (32, 33) is disclosed which is capable of distinguishing between colors used in color-coding schemes or between colors that indicate acceptable and unacceptable quality in products to be sorted or toleranced as part of a manufacturing process. The system utilizes parallel measurements (10–18) in a number of spectral bands of the reflectance from samples (7) being tested. Simultaneous complete referencing (22–30) for each spectral band of reflectance is provided to compensate for variations in the intensity and spectral output of the light source (1) used for illumination of samples (7).

0081702

ELECTRO-OPTICAL SYSTEM FOR COLOR MONITORING

This invention relates to instrumentation for recognizing color, and more particularly to a color monitoring system that can distinguish between the colors of a color-coding scheme used with a product, or between the colors that indicate acceptable and unacceptable quality of a product. Many industries manufacture products that are painted, dyed, pigmented, or otherwise colored intentionally as part of the manufacturing process. Some examples are the textile, paint, ink, paper and plastics industries. In such industries, precise measurement of the color of the final product is necessary for proper quality control. Instrumentation used for this color measurement usually consists of tristimulus colorimeters or spectrophotometers. Tristimulus colorimeters, when used to measure the color of a sample, directly measure the tristimulus values of the sample. These tristimulus values correspond to the amounts of the red, blue and green light primaries which, when combined additively, are required to produce the color of the sample being evaluated. In contrast, spectrophotometers, when used to measure the color of a sample, measure the spectral reflectance or transmittance of the light used to illuminate the sample, and then compute the tristimulus values for the sample from the spectral data. Many spectrophotometers are abridged to measure reflectance or transmittance in at least 16 discrete spectral bands across the visible spectrum.
In other industries, monitoring of product color can be useful in a variety of applications, but precise measurements of color, as seen by the eye, are not required. For example, color monitoring can be used as an indicator of the quality or acceptability of the manufactured products. For example, the color of fruits and vegetables is used to judge freshness, as well as aesthetic value in the marketplace. Through the use of color-coding, color can also be used as a means of identifying items. For example, wires used in electrical harnesses are generally color-coded to facilitate either manufacture or repair of the harness. There is sometimes a need to automatically inspect such harness in order to verify that the wires are in proper order. In other industrial applications, parts need to be sorted and separated on the basis of their natural color, or color-coded markings. For example, pharmaceutical pills or capsules can sometimes be quickly identified by means of their colors. In commercial printing, there is a requirement to measure the reflectance of the individual process color inks in order to monitor and control the quality of color printing.

For these sorting and tolerancing functions the measurement accuracy of colorimeters and spectrophotometers is not required, and therefore, the attendant cost of such equipment is not justified. Thus, there is a need for a simpler means of carrying out such sorting and tolerancing functions.

It is a principal object of the present invention to provide a simple, inexpensive system for acquiring a measurement related to color which would aid manufacturing processes required to sort products by color or to judge the quality of a product's color by determining whether it is within a certain tolerance of a reference color.

Another object of the present invention is to provide a color monitoring system capable of distinguishing between colors used in color-coding schemes, or between colors that indicate acceptable and unacceptable quality in products.

A further object of the present invention is to provide a reliable color monitoring system which is capable of distinguishing color with great speed and consistency.

These and other objects are achieved by the use of the color monitoring system of the present invention, comprising (a) an illuminating means for illuminating the sample; (b) an illumination reference measuring system for measuring the intensity of emitted light emitted by said illuminating means in a plurality of spectral bands to obtain an illumination measurement; (c) a sample reflectance measuring system for measuring the intensity of reflected light reflected by the sample in a plurality of spectral bands to obtain a reflectance measurement, the plurality of spectral bands used for measuring said emitted light being equal in number to a plurality of spectral bands used for measuring said reflected light; and (d) computing means for dividing said reflectance measurement by said illumination measurement to normalize said reflectance measurement and for comparing said normalized reflectance measurement to one or more stored reference measurements.

The electro-optical color monitoring system of the present invention uses parallel measurements, in a number of spectral bands, of the reflectance or transmittance of a solid or liquid sample. The invention has the capability of instantaneously performing measurements on rapidly moving colored samples, without contacting those samples, and without interference from ambient light. Such measurements are related to the color of the sample, and can, therefore, be used for purposes of automatic color monitoring. Advantages of the present invention are the speed and consistency with which it is capable of performing automatic monitoring of color, and its simplicity of design. The construction of an apparatus of the present invention is much simpler than that used in such color measuring systems as tristimulus colorimeters or spectrophotometers.

According to the preferred embodiment of the present invention, a pulsed flashtube is used as a light source for illumination of sample products to be tested. Light reflected from the samples is then collected and split up into a number of branches (parallel optical systems) to facilitate parallel measurement of the intensity of the reflected light in a corresponding number of different spectral bands. These bands are chosen according to the application of the color recognition system. This means selecting bands in those regions of the color spectrum which will optimize the response of the measurement system to a given color being "measured".

The present invention also provides for a simultaneous compensation system using complete light source referencing to compensate for variations in the intensity and spectral output of the light source. A portion of the light source beam is split off by means of a beamsplitter and connected by a light source reference optical system that is used to measure the level of intensity of the light source in a number of spectral bands, which are the same as, or similar to, the spectral bands used to measure the intensity of the light reflected from a sample. Each spectral band used in the reference system is, in width, equal to or broader than the corresponding band used in the sample system such that each band in the sample system is contained within a corresponding band in the reference system. Thus, the number of spectral bands used in the light source reference optical system is the same as the number of spectral bands used in the optical system for measuring the reflectance from a sample. In the preferred embodiment of the present invention, three or four spectral bands are used, depending on the operating mode for which the system is configurated, to measure the intensity of reflected light from the samples and the intensity of the light split off from the light source beam.

The color monitoring system of the present invention is capable of operating in a number of modes related to "measuring" color, including a color sorting mode and a tolerancing mode.

In the sorting mode, product samples under test are sorted by color. The system is first "trained" by allowing it to measure one or more acceptable reference samples of the products to be tested. These reference measurements are then stored for purposes of subsequent comparison with samples being tested. Thus, each reference sample measured is characterized by a stored triplet of reflectances called a reference triplet. Against this triplet a current triplet of reflectances, called a sample reflectance triplet, for a given sample under test is compared to "determine" the color of the sample.

For the tolerancing mode the acceptability of a number of colors used with a sample under test can be measured. As in the sorting mode, the system can first be "trained" by measuring reference color samples. However, under the normal mode of operation, the reference values, and their tolerances, for the reflectance of each color are manually entered into the system, such that there is a single reference value for each reference color. Each of the branches of the system used to measure reflectances from samples under test is devoted to a specific color to be monitored. Reflectance values measured by each branch from samples being tested are then compared with the stored single reference values to determine whether or not the current reflectance value is within a certain tolerance of the stored reference value.

Thus, with the present invention, it is not necessary to actually determine the particular color of a given sample. Rather, a determination is made as to whether given reflectance measurements taken from a sample are within a certain "distance" or tolerance from a stored set of reference values, obtained in the same instrument by observing a reference sample, or, in the case of tolerancing only, via manual input. Thus, the effect of instrument-to-instrument variations is eliminated. The system also allows for a quick and simple determination as to whether the "color" of the sample is acceptable, or the same is an expected color. The present invention thus provides for a simpler, more reliable system for "measuring" color to aid the manufacturing process.

Fig. 1 is an overall diagram of the color monitoring system of the present invention.

Fig. 2 and Fig. 3 are representative flowcharts of the steps which microprocessor 31 would carry out to do a sorting function.

Fig. 4 and Fig. 5 are representative flowcharts of the steps which microprocessor 31 would carry out to do a tolerancing function for a single branch of the reflectance optical system.

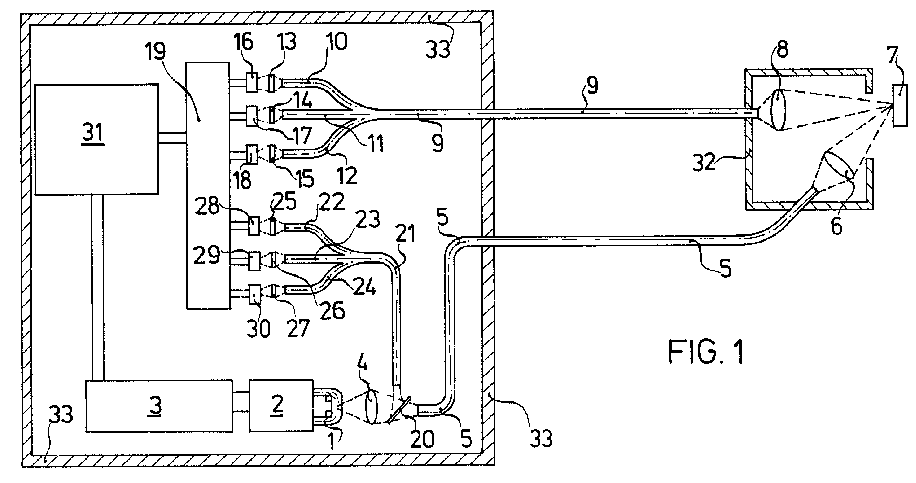

An overall diagram of a preferred embodiment of the present invention is shown in Fig. 1. A pulsed xenon flashtube 1 is used as a light source. Although other light sources can be used, a pulsed xenon flashtube is preferred. Operation of the flashtube is initiated by a trigger circuit 2 which is driven by a power supply 3. Lens 4, or an equivalent chain of lenses, is chosen to image the arc of flashtube 1, with the correct magnification, onto the end of an illumination fiberoptic bundle 5.

Light emanating from the illumination fiberoptic bundle 5 is projected by a lens 6, or an equivalent optical system, onto a sample 7 to be tested. Typically, the incident light impinges on the sample 7 at approximately 45° to the normal; however, it is not necessary to use this angle to perform the present invention. Light reflected from the sample is collected by a lens 8, or an equivalent optical system, and focused onto a collection fiberoptic bundle 9. This bundle, consisting of a number of fiberoptic light guides, is split into several branches.

In the preferred embodiment of the present invention, three or four branches are used, depending on the operating mode of the system. Fig. 1 shows three branches 10, 11, and 12 being used for the color sorting mode, each branch containing a subset of the total number of fiberoptic light guides. The use of multiple branches facilitates parallel measurement in a number of different spectral bands of the intensity of the light reflected from a given sample. The light emanating from branches 10, 11, and 12 of fiberoptic bundle 9 passes through corresponding optical filters 13, 14 and 15. These filters are typically made of colored glass, gelatin or plastic or multi-layered interference coatings, and are chosen according to the application. The filtered light is then sensed by corresponding photodetectors 16, 17, and 18 which are typically silicon photodiodes. Each photodetector then measures a signal that is proportional to the reflectance of the sample in the spectral region defined by the corresponding filter. Photodetectors 16, 17 and 18 are, in turn, wired to analog electronics unit 19 which, for each channel corresponding to one of the photodetectors 16, 17 or 18, includes an amplifier, integrator and an analog-to-digital converter. Thus, for each light pulse, a digital indication is provided for each channel corresponding to the quantity of light measured in the spectral band defined for each channel by its associated filter.

The signal currents generated in the photodetectors 16, 17 and 18 are proportional to the output intensity and wavelength distribution of flashtube 1, which may vary from pulse to pulse. To compensate for these variations the intensity of the output of flashtube 1 is measured for each pulse by splitting off a small (8%) portion of the illumination beam via a beamsplitter 20, typically made from a thin piece of microscope cover glass.

The portion of the output beam which is split off is collected by a reference fiberoptic bundle 21, which is divided into three branches 22, 23 and 24. The light passing through branches 22, 23 and 24 is filtered by optical filters 25, 26 and 27, and then sensed by reference photodetectors 28, 29 and 30. Filters 25, 26 and 27 are the same as, or similar to, filters 13, 14 and 15 used to filter the light reflected from a sample under test. Photodetectors 28, 29 and 30 are also wired to the analog electronics unit 19, which for each channel corresponding to one of the photodetectors 28, 29 or 30, there is also an amplifier, integrator and an analog-to-digital converter to generate a digital indication for each channel.

The digital data obtained from the sample reflectance- and the illumination reference channels is then transferred to a microcomputer 31, which performs the tasks of overall system control such as color sorting and tolerancing. Microcomputer 31 is of the normal, commercially available type. For the color sorting function, the system is first "trained" by allowing it to measure relfectances from reference samples. These reference measurements are then stored, and subsequently used for comparison purposes. For the tolerancing mode, "training" can also be used; however, the reference measurements used are generally entered manually.

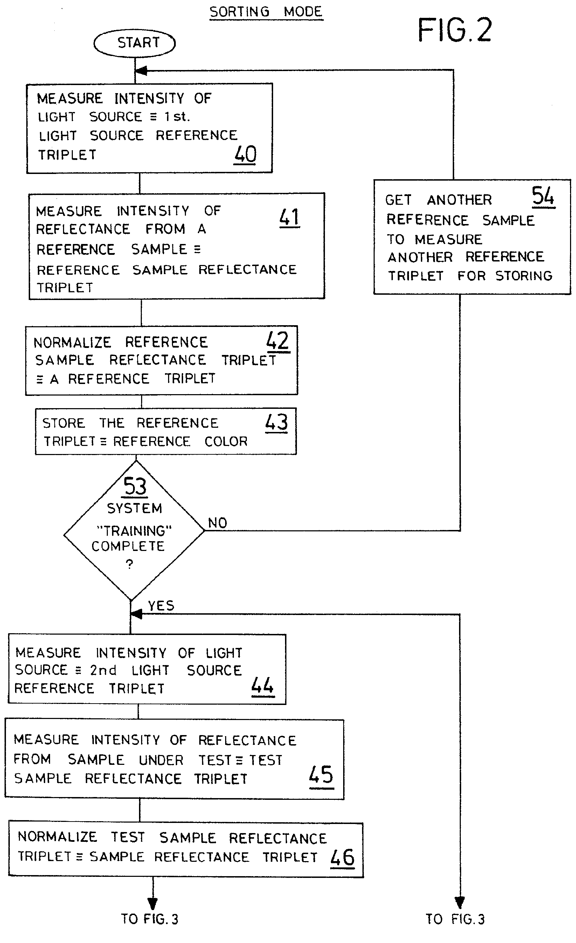

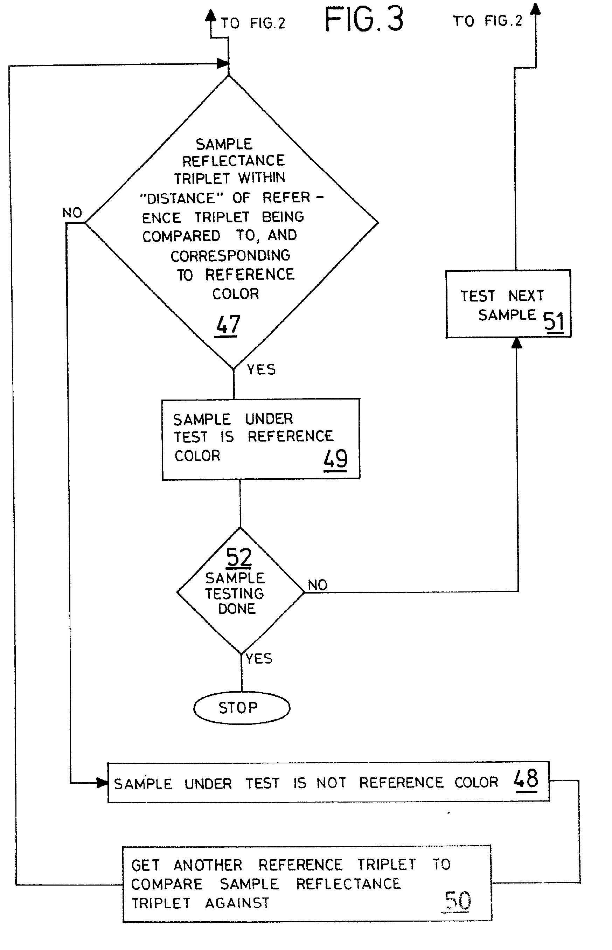

Figs. 2 through 5 are representative flowcharts of two of the functions which microcomputer 31 would be programmed to perform, i.e., sorting and tolerancing.

Figs. 2 and 3 show a flowchart for the color sorting mode of the color monitoring system of the present invention. Each reference color is characterized by a stored reference triplet 43, obtained by taking a light source intensity measurement 40 through all three branches of fiberoptic bundle 21 of Fig. 1 in response to a first illumination pulse; taking a reference sample reflectance intensity measurement 41 through all three branches of fiberoptic bundle 9 of Fig. 1; and by calculating a normalized measurement 42, obtained by dividing measurement 41 by measurement 40. Samples are then sorted by color by taking a second light source intensity measurement 44 through the three branches of fiberoptic bundle 21 of Fig. 1 for a later illumination pulse; taking a test sample reflectance intensity measurement 45 through the three branches of fiberoptic bundle 9 of Fig. 1; calculating a normalized measurement 46, obtained by dividing measurement 45 by measurement 44, and by making comparison 47 to determine whether measurement 46 is within a certain "distance" of stored reference triplet 43, thereby determining whether the product sample under test is of the color represented by stored reference triplet 43. Step 44 and those subsequent to it are repeated for each product sample to be tested.

The flowchart of Figs. 2 and 3 only shows the use of a single stored reference triplet for a single color. It is possible with the present invention to use virtually any number of similar stored reference triplets, with each triplet representing a different color. For additional reference triplets to be obtained decision 53 would result in a "NO" outcome until system "training"was complete.

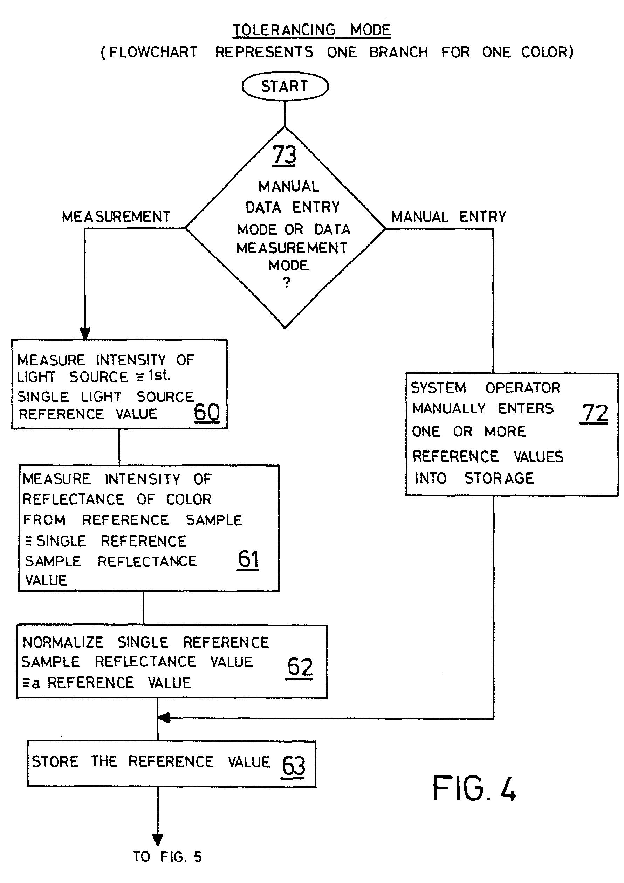

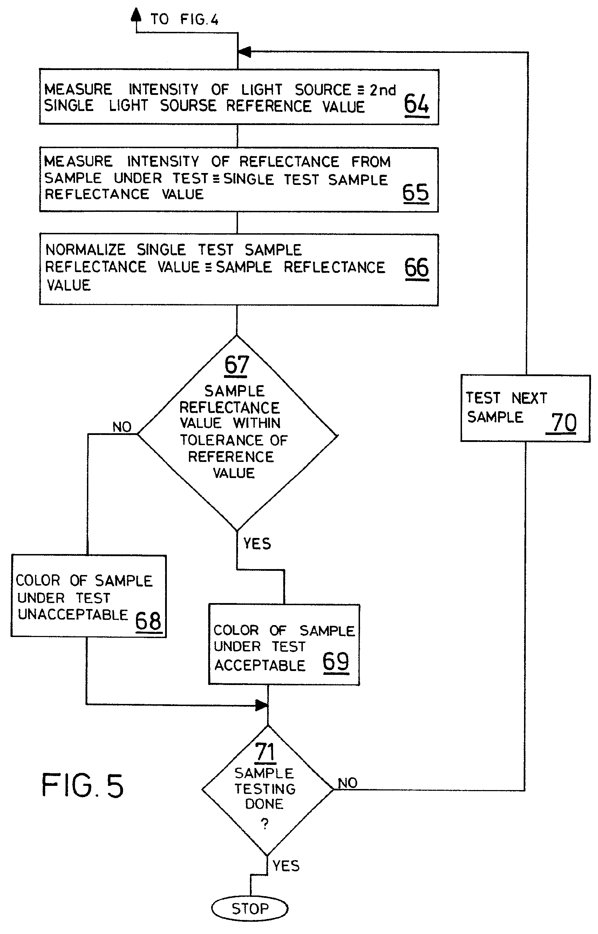

Figs. 4 and 5 show a flowchart for the tolerancing mode of the color monitoring system of the present invention. Here, each color is characterized by a single stored reference value 63, which is manually entered　72 in the normal operating mode. The values for the various colors used are obtained through experience gained trough prior training of the system. If "training" is to be used, reference value 63 is obtained by taking a light source intensity measurement 60 through a single branch of fiberoptic bundle 21 of Fig. 1 for a first illumination pulse; taking a reference sample reflectance intensity measurement 61 through a single branch of fiberoptic bundle 9 of Fig. 1, and by calculating a normalized measurement 62, obtained by dividing measurement 61 by measurement 60. The color of a sample under test is then tested by taking a second light source intensity measurement 64 through the single branch of fiberoptic bundle 21 of Fig. 1 for a later illumination pulse; taking a test sample reflectance intensity measurement 65 through the single branch of fiberoptic bundle 9 of Fig. 1, calculating a normalized measurement 66, obtained by dividing measurement 65 by measurement 64; and by making comparison 67 to determine whether measurement 66 is within a certain tolerance of single stored reference value 63, thereby determining whether the color of the sample under test is acceptable or not.

The flowchart of Figs. 4 and 5 describes the tolerancing mode for a single branch of the reflectance measuring system, and therefore, for a single color; however, in normal operation this procedure would be extended to each of three other branches of the system for three additional colors. Thus, the four branch system of the tolerancing mode is capable of measuring four colors. Such an arrangement can be used for monitoring process color inks in commercial printing. The monitoring of cyan, magenta, yellow and black process inks can be achieved by manually entering reference values and their tolerances to characterize each color ink. The spectral response of optical filters 13, 14, and 15, and a fourth filter not shown in Fig. 1, are then chosen to optimize sensitivity of the system to the changes in each color. An additional light source reference branch would also be used to compensate for the additional reflectance measuring branch.

In some applications, the present invention may be embodied to carry out any required computations through the use of hard wired digital logic or analog circuits. This alternative would eliminate the need for microcomputer 31 in such applications.

The ends of the fiberoptic bundles 5 and 9 nearest the sample to be tested, and the optics used to illuminate and collect light from the sample, are enclosed in a subsystem called an optical head 32. Optical head 32 is typically small in size, and positioned close to the sample. Because of its size and because fiberoptic bundles 5 and 9 are usually flexible, considerable freedom exists in the manner in which the optical head can be mounted. In certain applications the optical head 32 may be repetitively moved, or scanned across a region, in order to locate the position of a colored sample, or to monitor the uniformity of the color of a sample. In other applications, the geometrical arrangement of the components of the optical head can be changed in order to measure transmittance, gloss, or some other optical property for which the geometrical conditions define the application.

The remainder of the system is enclosed in console 33 forming the interface between the system and either a human operator or any automated equipment used with it. For human interface, a panel containing control switches and an output display can be used. A machine interface, on the other hand, would typically require only an electrical cable, or digital communications line.

For the tolerancing mode of the color monitoring system of the present invention used with printing and packaging applications, optical head 32 and console 33 are incorporated in a single package. Here, flashtube 1 is located near the sample 7, allowing fiberoptic bundle 5 to be eliminated in order to maximize optical efficiency. In this case, lenses 4 and 6 would be one and the same, the sample 7 being illuminated directly by an image of the arc of pulsed xenon flashtube 1.

Other embodiments of the color monitoring system may, for certain applications, contain sample reflectance and illumination reference fiberoptic bundles utilizing other than three or four branches. For example, other applications may require only two spectral measurements, the ratio of reflectances being the key parameter used in sorting or tolerancing.

CLAIMS:

1.    A color monitoring system for making decisions regarding the color of a sample under test comprising (a) an illuminating means for illuminating the sample; (b) an illumination reference measuring system for measuring the intensity of emitted light emitted by said illuminating means in a plurality of spectral bands to obtain an illumination measurement; (c) a sample reflectance measuring system for measuring the intensity of reflected light reflected by the sample in a plurality of spectral bands to obtain a reflectance measurement, the plurality of spectral bands used for measuring said emitted light being equal in number to the plurality of spectral bands used for measuring said reflected light; and (d) computing means for dividing said reflectance measurement by said illumination measurement to normalize said reflectance measurement and for comparing said normalized reflectance measurement to one or more stored reference measurements.

2.    The color monitoring system of claim 1 wherein said illuminating means is a pulsed flashtube.

3.    The color monitoring system of claim 1 or 2 wherein said illumination reference measuring system includes (a) a first optical system for collecting a portion of said emitted light; (b) a first filtering system for filtering said portion of said emitted light into said plurality of spectral bands; and (c) a first photoelectric system for converting said portion of said emitted light filtered by said first filtering system into a plurality of first electric signals; and (d) a second optical system for collecting said reflected light; (e) a second filtering system for filtering said reflected light collected by said second optical system into said plurality of spectral bands; and (f) a second photoelectric system for converting said reflected light filtered by said second filtering system into a pluralitiy of second electrical signals.

4.    The color monitoring  system of claim 1 wherein said computing means is an electronic device.

5.    The system of claim 3 wherein the first optical system includes a beamsplitter.

6.    The system of claim 3 wherein each of said first and second filtering systems covers a plurality of spectral bands.

7.    The system of claims 1 to 6 wherein said first plurality of spectral bands and said second plurality of spectral bands are equal in number.

8.    The system of claim 7 wherein each of said first plurality of spectral bands encompasses a corresponding one of said second plurality of spectral bands.

9.    The system of claim 6 wherein the plurality of spectral bands covered by said first filtering system encompasses the plurality of spectral bands covered by said second filtering system.

10.    The system of claim 1 wherein the computing means is a microprocessor.

11.    The system of claim 1 wherein said illuminating means includes a fiberoptic bundle.

12.    A color monitoring  system for making decisions regarding the color of samples under test comprising (a) a pulsed flashtube for illuminating the samples; (b) an illumination measurement system for measuring the intensity of pulses from said pulsed flashtube in a plurality of spectral bands including a first optical system, a first filtering system and a first photoelectroc system; (c) a reflectance measurement system for measuring the intensity of light re-

- 14 -                                   0081702

flected by the samples in a plurality of spectral bands including a second optical system, a second filtering system and a second photoelectric system; and (d) a computing means for obtaining a normalized second signal by dividing a second signal generated by said second photoelectric system by a first signal generated by said first photoelectric system, and for comparing said normalized second signal to one or more stored reference signal(s).

13.     The color monitoring  system of claim 12 wherein each of said first and second optical systems has a plurality of branches, the plurality of branches of each of said first and second optical systems being equal in number.

14.     The system of claim 13 wherein each of said first and second filtering systems has a plurality of optical filters, each optical filter corresponding to a different spectral band and filtering one of said plurality of branches.

15.     The system of claim 12 wherein said computing means is a microprocessor.

16.     A method for monitoring  colors of samples under test for the purpose of making decisions regarding the handling of the sample comprising (a) illuminating a reference sample from a light source; (b) measuring the intensity of light from said light source in a plurality of spectral bands; (c) measuring the intensity of light reflected by the sample in a plurality of spectral bands; (d) normalizing said measurement of the intensity of light reflected by the sample by dividing it by said measurement of the intensity of light from said light source to obtain a reference measurement; (e) storing said reference measurement; and (f) comparing subsequent normalized reflectance measurements obtained from samples under test with one or more of stored reference measurements.

FIG. 1

0081702

0081702

SORTING MODE

# FIG.2

START

MEASURE INTENSITY OF
LIGHT SOURCE ≡ 1st.
LIGHT SOURCE REFERENCE
TRIPLET  40

MEASURE INTENSITY OF  41
REFLECTANCE FROM A
REFERENCE SAMPLE ≡
REFERENCE SAMPLE REFLECTANCE
TRIPLET

NORMALIZE REFERENCE  42
SAMPLE REFLECTANCE TRIPLET
≡ A REFERENCE TRIPLET

STORE THE REFERENCE  43
TRIPLET ≡ REFERENCE COLOR

53
SYSTEM
"TRAINING"
COMPLETE
?

NO

GET ANOTHER  54
REFERENCE SAMPLE
TO MEASURE
ANOTHER REFERENCE
TRIPLET FOR STORING

YES

MEASURE INTENSITY OF LIGHT
SOURCE ≡ 2nd LIGHT SOURCE
REFERENCE TRIPLET  44

MEASURE INTENSITY OF REFLECTANCE
FROM SAMPLE UNDER TEST ≡ TEST
SAMPLE REFLECTANCE TRIPLET  45

NORMALIZE TEST SAMPLE REFLECTANCE
TRIPLET ≡ SAMPLE REFLECTANCE TRIPLET  46

TO FIG. 3

TO FIG. 3

0081702

# FIG.3

TO FIG.2

TO FIG.2

SAMPLE REFLECTANCE TRIPLET WITHIN "DISTANCE" OF REFERENCE TRIPLET BEING COMPARED TO, AND CORRESPONDING TO REFERENCE COLOR  **47**

NO

YES

TEST NEXT SAMPLE **51**

SAMPLE UNDER TEST IS REFERENCE COLOR  **49**

**52** SAMPLE TESTING DONE

NO

YES

STOP

SAMPLE UNDER TEST IS NOT REFERENCE COLOR **48**

GET ANOTHER REFERENCE TRIPLET TO COMPARE SAMPLE REFLECTANCE TRIPLET AGAINST  **50**

0081702

TOLERANCING MODE
(FLOWCHART REPRESENTS ONE BRANCH FOR ONE COLOR)

START

**73**
MANUAL DATA ENTRY MODE OR DATA MEASUREMENT MODE ?

MEASUREMENT

MANUAL ENTRY

MEASURE INTENSITY OF LIGHT SOURCE ≡ 1st. SINGLE LIGHT SOURCE REFERENCE VALUE **60**

SYSTEM OPERATOR MANUALLY ENTERS **72** ONE OR MORE REFERENCE VALUES INTO STORAGE

MEASURE INTENSITY OF REFLECTANCE OF COLOR FROM REFERENCE SAMPLE ≡ SINGLE REFERENCE SAMPLE REFLECTANCE VALUE **61**

NORMALIZE SINGLE REFERENCE SAMPLE REFLECTANCE VALUE **62** ≡ a REFERENCE VALUE

STORE THE REFERENCE VALUE **63**

FIG. 4

TO FIG. 5

0081702

↑ TO FIG.4

MEASURE INTENSITY OF LIGHT SOURCE ≡ 2nd
SINGLE LIGHT SOURSE REFERENCE VALUE    **64**

MEASURE INTENSITY OF REFLECTANCE FROM
SAMPLE UNDER TEST ≡ SINGLE TEST SAMPLE
REFLECTANCE VALUE    **65**

NORMALIZE SINGLE TEST SAMPLE
REFLECTANCE VALUE ≡ SAMPLE REFLECTANCE    **66**
VALUE

**67**
SAMPLE
REFLECTANCE
VALUE WITHIN
TOLERANCE OF
REFERENCE
VALUE

NO

YES

TEST NEXT
SAMPLE    **70**

COLOR OF SAMPLE
UNDER TEST
UNACCEPTABLE    **68**

COLOR OF SAMPLE
UNDER TEST
ACCEPTABLE    **69**

**FIG.5**

**71**
SAMPLE
TESTING
DONE
?

NO

YES

STOP

European Patent
Office

**EUROPEAN SEARCH REPORT**

0081702

Application Number

EP  82 11 0785

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | G 01 J    3/50 |
| X | US-A-4 266 878  (S.O. AUER)  * Claims 1-3, 10; abstract; column 4, line 26 - column 6, line 9; figure 2 * | 1,4,10 ,11 | G 01 N   21/55 |
| A | | 3,6,12 ,15,16 | |
| | --- | | |
| P,Y | EP-A-0 047 094  (ORIEL SCIENTIFIC LTD.)  * Claims 1, 2; abstract; page 6, line 1 - page 9, line 1; figure 1 * | 1,2,4, 11,12, 16 | |
| | | | TECHNICAL FIELDS SEARCHED (Int. Cl. ³) |
| P,A | | 3 | |
| | --- | | |
| Y | US-A-4 076 421  (S:J. KISHNER)  * Claims 1-5, 9; column 2, lines 3-6,  9-13; column 3, lines 2, 3, 17-32; column 3, line 56 - column 4, line 18; abstract; figure 2 * | 1,2,4, 11,12 | G 01 J    3/00  G 01 N   21/00 |
| A | | 3,6,16 | |
| | ---              -/- | | |

The present search report has been drawn up for all claims

| Place of search BERLIN | Date of completion of the search 17-02-1983 | Examiner HOFMANN D G |
|---|---|---|

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. 3) |
|---|---|---|---|
| Y | EP-A-0 010 940 (HANSCOM) <br> * Claims 1, 3, 5, 9; abstract; page 4, line 7 - page 7, line 10; figures 1, 2 * | 16 | |
| A | | 1 | |
| | --- | | |
| A | US-A-3 737 239 (J.M. ADAMS et al.) <br><br> * Claims 1, 16; abstract; column 2, lines 40-68; figure 1 * | 1,6,11 ,13,14 ,16 | |
| | ----- | | |

TECHNICAL FIELDS SEARCHED (Int. Cl. 3)

The present search report has been drawn up for all claims

| Place of search BERLIN | Date of completion of the search 17-02-1983 | Examiner HOFMANN D G |
|---|---|---|